# EUROPEAN PATENT SPECIFICATION

(11) **EP 3 257 678 B1**
(45) Date of publication and mention of the grant of the patent: **04.12.2019**
(21) Application number: 17171862.0
(22) Date of filing: 19.05.2017
(51) Int. Cl.: B41J 3/407, B41J 11/70

(54) **RECEIPT PRINTER**
QUITTUNGSDRUCKER
IMPRIMANTE DE RÉCÉPISSÉS

(30) Priority: 20.05.2016 JP 2016101683
(43) Date of publication of application: 20.12.2017
(73) Proprietor: Toshiba TEC Kabushiki Kaisha, Tokyo 141-8562 (JP)
(72) Inventor: SANADA, Tsuyoshi, Shinagawa-ku, Tokyo 141-8562 (JP)
(74) Representative: Fédit-Loriot

(56) References cited:
- WO-A1-2006/046454
- US-A1- 2013 014 624
- US-A1- 2014 253 660
- US-B1- 6 428 226

## Description

### FIELD

Embodiments described herein relate generally to a receipt printer.

### BACKGROUND

A commodity information processing apparatus (for example, POS terminal) is generally equipped with a receipt printer for printing information such as a transaction details on a receipt. The receipt printer prints information on a rolled paper and cuts the paper to discharge it from a discharge port. By way of example only, US2014/253660A1, US2013/014624A1, US6428226B1, and WO2006/046454A1 disclose such a paper discharging apparatus to be used with a receipt or label printer. At this time, there is a case in which the receipt printer cuts the paper in a manner of a so-called partial cut so that the paper (receipt) does not drop or fall from the discharge port to an inner side (for example, a conveyance path of the paper) or an outer side (for example, floor) of the printer. In the partial cut, the paper is partially cut or separated from the rolled paper to leave a part thereof along the cutting direction when the paper becoming the receipt is separated from the rolled paper.

### DESCRIPTION OF THE DRAWINGS

Fig. 1 is a perspective view illustrating a commodity information processing apparatus provided with a receipt printer according to an embodiment;
Fig. 2 is a perspective view of the receipt printer according to the present embodiment;
Fig. 3 is a block diagram of the receipt printer;
Fig. 4 is a diagram illustrating the internal structure of the receipt printer;
Fig. 5(A) is a diagram illustrating a state in which a paper is completely cut, and Fig. 5(B) is a diagram illustrating a state in which a paper is partially cut;
Fig. 6(A) is a diagram illustrating a clamping section in a state in which a fixed section and a movable section are separated, and Fig. 6(B) is a diagram illustrating the clamping section in a state in which the fixed section and the movable section are close to each other;
Fig. 7 is a flowchart illustrating a receipt discharge processing according to the present embodiment;
Fig. 8 is a diagram illustrating a state in which the paper is directly discharged from a discharge port without clamping a front end of the paper by the clamping section;
Fig. 9 is a diagram illustrating a state in which the movable section is moved towards the fixed section;
Fig. 10 is a diagram illustrating a state in which the front end of the paper is clamped by the fixed section and the movable section;
Fig. 11 is a diagram illustrating a state in which the paper is discharged from the discharge port in a state of being bent into a loop shape;
Fig. 12 is a diagram illustrating a state in which information is printed on an outer surface of the receipt; and
Fig. 13(A) is a diagram illustrating a modification of the clamping section, and Fig. 13(B) is a diagram illustrating a state in which the clamping section clamps a paper between a fixed section and a movable section.

### DETAILED DESCRIPTION

In accordance with an embodiment, a receipt printer comprises a discharge port configured to discharge a receipt, a conveyance section configured to convey a paper becoming the receipt to the discharge port; a clamping section including a first section and a second section; and a discharge control module, characterized in that the discharge control module is configured to:
control one of the first and second sections to move toward the other section for clamping a front end of the paper between the first and second sections at an upstream side of the discharge port in a conveyance direction, and
control the conveyance section to continue conveying the paper after the front end of the paper is clamped to discharge a part of the paper which is bent into a loop shape from the discharge port.

Preferably, the clamping section includes a first section and a second section to clamp the front end of the paper with the first section and the second section.

Preferably, at least one of the first section and the second section is provided with a planar section at a side thereof facing the paper.

Preferably, the planar section is inclined towards a paper discharge direction in which the paper is discharged from the discharge port to form a paper clamping angle greater than 90° by the paper discharge direction and the planar section at the time the paper is clamped.

Preferably, at least one of the first section and the second section is a roller.

The clamping section may clamp the paper between a circumferential surface of the roller and the other section of the clamping section.

The receipt printer may further comprise: a cut section configured to separate a part becoming the receipt from the paper, wherein the discharge control module carries out a full cut to completely separate the part becoming the receipt from the paper in a case in which at least the front end of the paper is clamped by the clamping section.

The receipt printer may further comprise: a printing section configured to print information on the paper.

Preferably, the printing section carries out printing on an outer surface side of front and back surfaces of the paper at the time the paper is bent into the loop shape to be discharged from the discharge port.

Hereinafter, embodiments for realizing the invention are described with reference to the accompanying drawings. In the drawings, the same or equivalent components are donated with the same reference numerals.

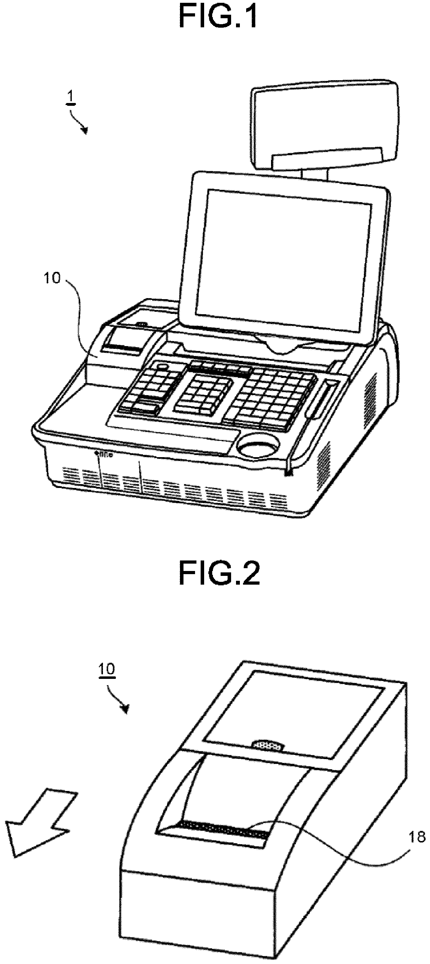

Fig. 1 is a perspective view illustrating a commodity information processing apparatus 1 provided with a receipt printer 10 according to the embodiment. The commodity information processing apparatus 1 is, for example, a POS (Point Of Sales) terminal. The commodity information processing apparatus 1 is arranged at each store and is operated by an operator, e.g., store clerk. The commodity information processing apparatus 1 is connected to a store server, i.e., POS server, (not shown) via a network. The receipt printer 10 is fixed or built in the commodity information processing apparatus 1.

Fig. 2 is a perspective view of the receipt printer 10 taken out of the commodity information processing apparatus 1. The receipt printer 10 is used to issue a receipt. The receipt printer 10 is provided with a discharge port 18 for discharging the receipt. The discharge port 18 is opened upward. The appearances of the port 18 shown in Fig. 1 and Fig. 2 are merely examples, and various modifications are enabled. In the following description, a front side (for example, a side where an operator stands at) of the receipt printer 10 is referred to as a "device front side", and an opposite side thereof is referred to as a "device rear side". In the example in Fig. 2, the device front side is a direction shown by an outline arrow, and the device rear side is an opposite direction thereto.

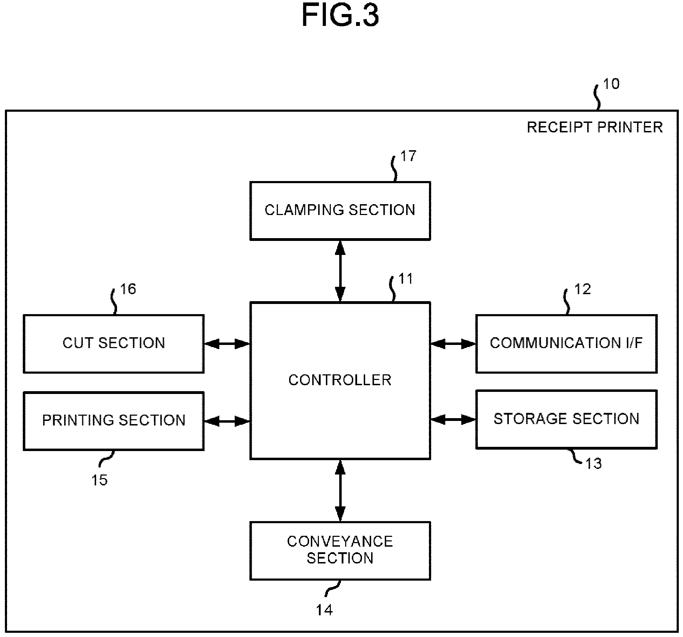

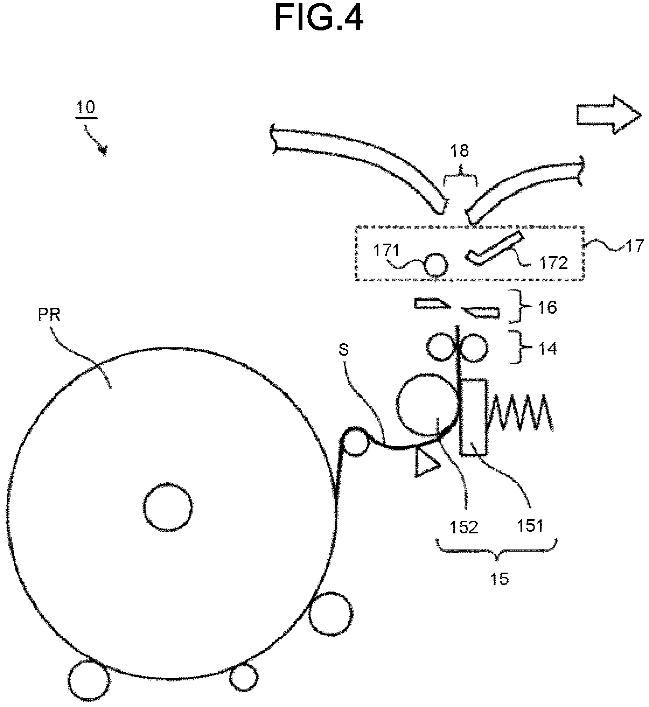

Fig. 3 is a block diagram of the receipt printer 10. Fig. 4 is a diagram illustrating the internal structure of the receipt printer 10. The receipt printer 10 detachably receives a rolled paper PR. The receipt printer 10 prints details on a paper S led from the rolled paper PR to discharge the paper S from the discharge port 18 as a receipt.

As shown in Fig. 3, the receipt printer 10 is provided with a controller 11, a communication interface 12, a storage section 13, a conveyance section 14, a printing section 15, a cut section 16 and a clamping section 17.

The controller 11 is a processing device such as a processor. The controller 11 operates according to a program stored in a ROM (Read Only Memory) and a RAM (Random Access Memory) that are not shown, or the storage section 13, to realize various operations including a "receipt discharge processing" described later. The controller 11 functions as a discharge control module which controls the conveyance section 14, the cut section 16 and the clamping section 17 to discharge the paper from the discharge port 18.

The communication interface 12 communicates with a control device (for example, processor) of the commodity information processing apparatus 1. The communication interface 12 acquires various data from the commodity information processing apparatus 1 to transmit it to the storage section 13. The data acquired by the communication interface 12 from the commodity information processing apparatus 1 contains information (for example, transaction details) to be printed on the receipt by the printing section 15. In the following description, information printed by the printing section 15 on the receipt is referred to as a print data.

The storage section 13 is a data readable and writable storage device such as a DRAM (Dynamic Random Access Memory), an SRAM (Static Random Access Memory), a flash memory, a hard disk and the like. The storage section 13 may be a built-in memory of the controller 11 or a memory separate from the controller 11. The storage section 13 stores information such as the transaction details received by the communication interface 12 and a program for operating the controller 11.

The conveyance section 14 is a device (or a mechanism) for conveying the paper S led from the rolled paper PR towards the discharge port 18. As shown in Fig. 4, the conveyance section 14 is a pair of rollers arranged to face each other across a movement route of the paper S. The constitution of the conveyance section 14 is not limited to that. For example, the paper S may be conveyed by the rotation of a platen roller 152 of the printing section 15 to draw the paper S out of the rolled paper PR.

The printing section 15 is used to print various information such as a transaction details on the paper S. The printing section 15 is a thermal print unit. The printing section 15 includes a thermal head 151 and the platen roller 152. The printing section 15 prints information such as a transaction details on the paper S under the control of the controller 11.

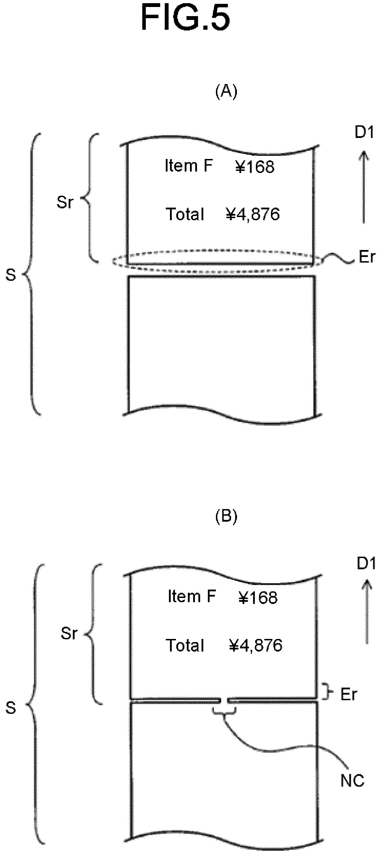

The cut section 16 is a cutter, e.g., a slide type cutter, for cutting a part becoming the receipt from the paper S. Of course, the constitution of the cut section 16 is not limited to that, and various modifications are enabled. The cut section 16 enables both full cut and partial cut. Fig. 5(A) is a diagram illustrating a state in which the paper S is completely cut. Fig. 5(B) is a diagram illustrating a state in which the paper S is partially cut.

In the full cut, the part becoming the receipt is completely separated from the paper. For example, as shown in Fig. 5(A), a part (Er shown in Fig. 5(A)), i.e., a rear end of a receipt Sr, is completely separated from the paper S.

In the partial cut, the part becoming the receipt is partially separated from the paper. For example, as shown in Fig. 5(B), in the partial cut, the cut section completes the separation of the receipt in a state in which a part (NC shown in Fig. 5(B), hereinafter, referred to as a non-cut section) of a rear end Er of the receipt Sr remains. In this case, the operator eventually tears the non-cut section NC to separate the receipt Sr from the paper S. Further, in Fig. 5(B), the non-cut section NC is positioned at the center of the rear end Er of the receipt Sr; however, the position of the non-cut section NC is not limited to that. For example, the non-cut section NC may be positioned at a left edge and a right edge of the rear end Er. The number of the non-cut sections NC is not limited to one, and a plurality of the non-cut sections NC may be formed.

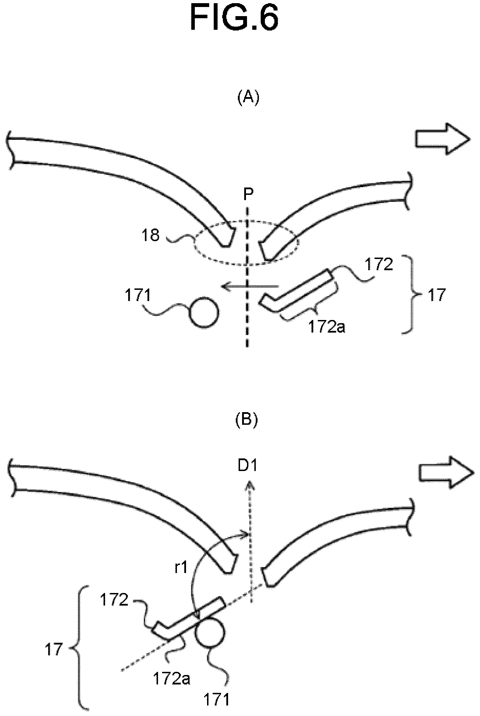

Returning to Fig. 4, the clamping section 17 clamps the paper S in the front of the discharge port 18 (upstream side in a conveyance direction of the paper S). Fig. 6(A) and Fig. 6(B) are enlarged views of the vicinity of the clamping section 17 of the receipt printer 10. A direction of an outline arrow in Fig. 6 (A) and Fig. 6 (B) is the device front side and an opposite direction thereto is the device rear side. The clamping section 17 includes a fixed section 171 (first section) and a movable section 172 (second section) .

The fixed section 171 is a roller fixed on the receipt printer 10 in a rotatable manner. A rotation shaft of the fixed section 171 faces a direction (backward direction in the drawing) orthogonal to a movement route P of the paper S. A rotational resistance force is applied to the roller constituting the fixed section 171. Thus, a fixed force is required to rotate the fixed section 171. The fixed section 171 is positioned in the front of the discharge port 18. In Fig. 6(A), the fixed section 171 is arranged at a position entering the inside of the receipt printer 10 along the movement route P from the discharge port 18. A distance from the discharge port 18 to the fixed section 171 is, for example, 1 cm∼10 cm. The fixed section 171 is positioned at the device rear side of the movement route P.

The movable section 172, a movable member, for clamping the paper S with the fixed section 171. The movable section 172 is arranged to face the fixed section 171 across the movement route P of the paper S. The movable section 172 is a plate-like member and an end thereof at the device rear side bends or curves obliquely upward. The movable section 172 is movable towards the device rear side. The movable section 172 includes a planar section 172a at obliquely lower side thereof. The movable section 172 passes the movement route P of the paper S and moves to the device rear side, and eventually the planar section 172a thereof abuts against the fixed section 171 via an elastic body (spring and the like) as shown in Fig. 6(B). In the present embodiment, the planar section 172a abuts against the fixed section 171 side via the elastic body (not shown) ; however, the present embodiment is not limited to that. For example, the planar section 172a may be moved in a direction shown in Fig. 6(A) and then a movable mechanism may be arranged in the fixed section 171 to abut against the planar section 172a via the elastic body (not shown) . A smaller angle r1 (i.e., inferior angle) of angles formed by the planar section 172a and a paper discharge direction D1 is greater than 90°. The paper discharge direction D1 is a direction in which the paper S is discharged from the discharge port 18.

An operation of the receipt printer 10 having such an above constitution is described.

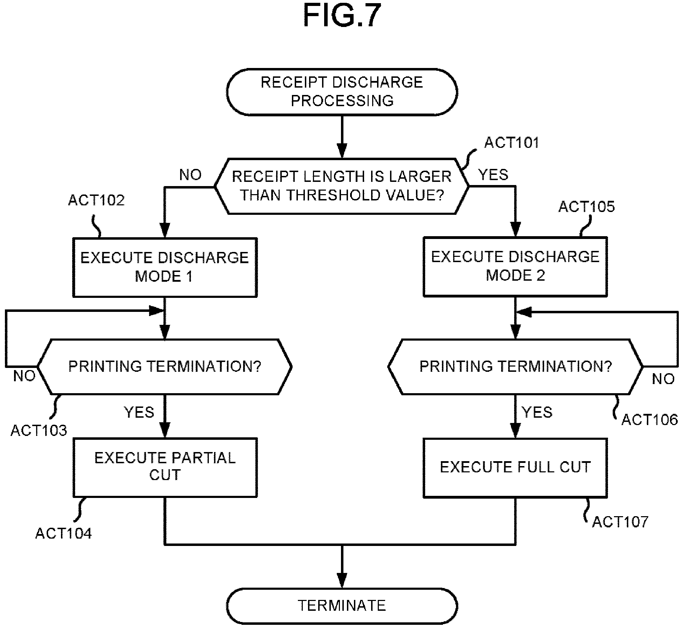

The controller 11 of the receipt printer 10 starts the receipt discharge processing if receiving a printing start command from the commodity information processing apparatus 1. As stated above, data to be printed on the receipt, i.e., print data, is stored in the storage section 13. Hereinafter, the receipt discharge processing is described with reference to the flowchart in Fig. 7.

The controller 11 determines whether a length of the receipt is greater than a preset threshold value (ACT 101) . At this time, the controller 11 determines the length of the receipt on the basis of the print data stored in the storage section 13. For example, the controller 11 determines the length of the receipt according to the number of printing lines and a width of each line.

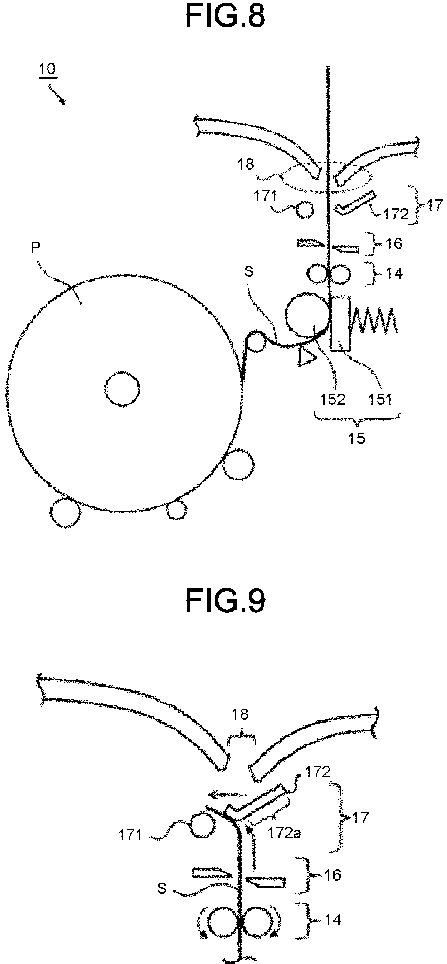

If the length of the receipt is smaller than the preset threshold value (No in ACT 101), the controller 11 executes a discharge mode 1 (ACT 102). In the discharge mode 1, the paper S is discharged from the discharge port 18 without being clamped by the clamping section 17. Fig. 8 is a diagram illustrating a state in which the paper S is discharged in the discharge mode 1. The controller 11 controls the printing section 15 to print information on the paper S while controlling the conveyance section 14 to convey the paper S. The paper S passes between the fixed section 171 and the movable section 172 to be discharged from the discharge port 18.

The controller 11 determines whether the printing is completed (ACT 103). If the printing is not completed (No in ACT 103), the controller 11 returns to the processing in ACT 102 to continue the printing operation and the discharge operation. If the printing is completed (Yes in ACT 103), the controller 11 controls the cut section 16 to separate the part which becomes the receipt from the paper S. At this time, the controller 11 carries out the partial cut so that a paper jam caused by the drop of the receipt to the inside of the receipt printer 10 does not occur. As shown in Fig. 5 (B), the partial cut partially separates the part becoming the receipt from the paper S. If the receipt is short, even if the controller 11 executes the partial cut, there is rare possibility of dropping the receipt by being torn with its own weight.

Returning to ACT 101 in Fig. 7, if the length of the receipt is greater than the preset threshold value (Yes in ACT 101), the controller 11 executes a discharge mode 2 (ACT 105) . In the discharge mode 2, the paper S is bent into the loop shape to be discharged from the discharge port 18.

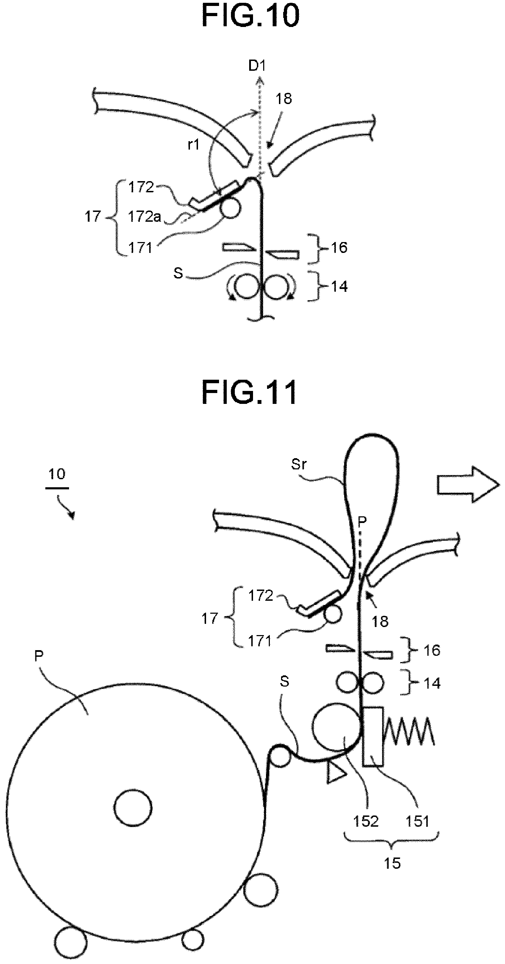

Fig. 9∼Fig. 11 are diagrams illustrating a state in which the paper S is discharged in the discharge mode 2. The controller 11 prints information on the paper S while controlling the conveyance section 14 to convey the paper S. The controller 11 moves the movable section 172 towards the fixed section 171 as shown in Fig. 9 if the front end of the paper S is positioned in the front (i.e., the clamping section 17) of the discharge port 18. Then, the controller 11 clamps the front end of the paper S with the fixed section 171 and the movable section 172 as shown in Fig. 10. The clamping section 17 clamps the front end of the paper S with a circumferential surface of the roller constituting the fixed section 171 and the planar section 172a of the movable section 172. If the controller 11 continues the conveyance of the paper S in this way, the paper S is bent into the loop shape and is discharged from the discharge port 18. Furthermore, the paper S is clamped by the fixed section 171 and the planar section 172a; however, at the time, a clamped part (front end) of the paper S is not necessarily stopped and may be in a clamped state in which the paper S moves slightly. Even in that case, compared with a movement speed of the front end of the paper S, as a conveyance speed of the conveyance section 14 is high, the paper S is bent into the loop shape with such speed difference. The controller 11 sets the speed of print of information on the paper S and the speed of the conveyance of the paper S at a higher rate compared with the discharge mode 1, and may discharge the paper S at the higher speed compared with the discharge mode 1. Fig. 11 is a diagram illustrating a state in which the paper S is discharged from the discharge port 18 in a state of being bent into the loop shape.

Furthermore, the planar section 172a is inclined towards the paper discharge direction D1. The paper clamping angle r1 at the time the clamping section 17 clamps the paper S is greater than 90°. Thus, the controller 11 controls the conveyance section 14 and the paper S is smoothly bent into the loop shape only by continuing the conveyance of the paper S after the front end of the paper S is clamped by the clamping section 17. The paper clamping angle r1 is formed by the paper discharge direction D1 and the planar section 172a as shown in Fig. 10. The paper clamping angle r1 is an inferior angle and smaller than 180°.

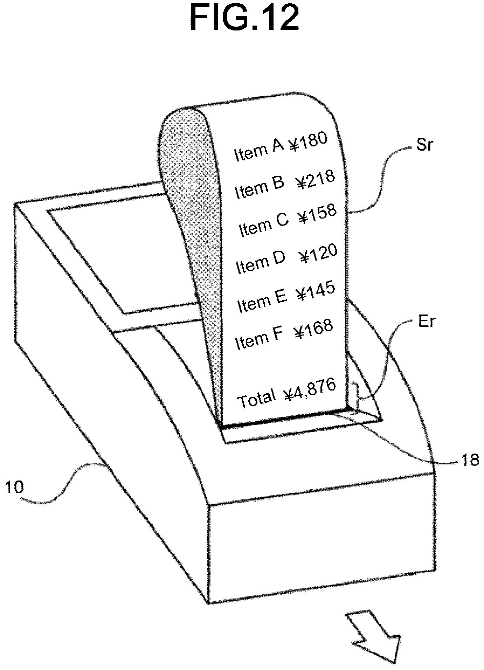

The printing section 15 is arranged to execute printing on an outer surface side of front and back surfaces of the paper S at the time the paper S is bent into the loop shape to be discharged from the discharge port 18. Fig. 12 is a diagram illustrating a state in which information is printed on an outer surface side of the receipt Sr. In the case of the receipt printer 10 of the present embodiment, the device front side of the paper S located in the movement route P becomes the outer surface. Thus, the printing section 15 is arranged such that the thermal head 151 is located at the device front side of the movement route P as shown in Fig. 11.

The clamping section 17 is arranged to clamp the front end of the paper S at the device rear side of the movement route P of the paper S. Thus, at the time the paper S is bent into the loop shape to be discharged from the discharge port 18, the rear end Er of the receipt Sr is located at the device front side as shown in Fig. 12.

Returning to Fig. 7, the controller 11 determines whether the printing is completed (ACT 106) . If the printing is not completed (No in ACT 106), the controller 11 returns to the processing in ACT 105 to continue the printing operation and the discharge operation. If the printing is completed (Yes in ACT 106), the controller 11 controls the cut section 16 to separate the part becoming the receipt from the paper S. At this time, the controller 11 carries out the full cut so that the rear end of the receipt is neatly cut (ACT 107). The full cut completely separates the part becoming the receipt Sr from the paper S as shown in Fig. 5(A).

After the separation of the part becoming the receipt, the controller 11 terminates the receipt discharge processing.

In accordance with the present embodiment, the receipt printer 10 bends the paper S into the loop shape to discharge it from the discharge port 18 by clamping the front end of the paper S in the front of the discharge port 18 in a case in which at least the length of the receipt is longer than a preset length. As the front end of the paper S is clamped, even if the receipt printer 10 completely cuts the paper S, the receipt Sr rarely falls out of the discharge port 18. Of course, even if the receipt printer 10 partially cuts the paper S, the receipt Sr rarely falls out of the discharge port 18.

Generally, if the receipt is longer compared with the preset length, the operator hands over the receipt to a customer in a state of folding the receipt in half. The receipt printer 10 of the present embodiment bends the receipt into the loop shape to discharge it from the discharge port 18 if the receipt is long. Thus, the operator can easily fold the long receipt in half by sandwiching a middle part of the loop-like receipt from the front and back sides thereof and pulling it out from the discharge port 18. At this time, the operator may further fold the receipt in the folded state in half to fold the receipt in four. Because it does not take much time to fold the receipt in half or fold it in four, it is possible to realize improvement in a settlement processing by the operator.

If the length of the receipt is shorter than the preset length, and the clamping section 17 does not clamp the front end of the paper S, the receipt printer 10 partially cuts the sheet S, as in the past. Thus, the receipt rarely falls out of the discharge port 18. If the length of the receipt is shorter than the preset length as stated above, the receipt printer 10 straightly discharges the receipt Sr from the discharge port 18. Thus, the situation that the operator is hard to pick up the receipt because of the receipt, having a short length, which is bent into the loop shape does not occur. The operator may hand over the receipt in a natural shape, a straight line state, to the customer as it is.

In a case in which the receipt printer 10 carries out the partial cut, the operator must tear the non-cut section NC to take the receipt out of the discharge port 18. In this case, as a part of the non-cut section NC which is cut becomes coarse, the rear end Er of the receipt is not neat. However, the receipt printer 10 of the present embodiment completely cuts the paper S in a case in which the front end of the paper S is clamped by the clamping section 17. Thus, if at least the front end of the paper S is clamped by the clamping section 17, the rear end Er of the receipt is straight and neat.

One of the sections (the fixed section in the present embodiment) constituting the clamping section 17 is a roller. Friction generated between the receipt and the clamping section 17 is small at the time the operator pulls out the receipt, and thus the receipt is rarely damaged even if the operator pulls out the receipt with a large force.

The printing section 15 of the receipt printer 10 is arranged to carry out printing on the outer surface side of the front surface and the back surface of the paper S at the time the paper S is bent into the loop shape to be discharged from the discharge port 18. Thus, the operator can visually confirm information printed on the receipt in a state in which the receipt is located at the discharge port 18.

The clamping section 17 of the receipt printer 10 is arranged such that the rear end Er of the receipt is located at the device front side at the time the paper S is bent into the loop shape to be discharged from the discharge port 18. In many cases, a total amount (purchase amount), a deposited amount and a change amount are printed at the last part (rear end) of the receipt. Thus, the rear end Er of the receipt is located at the device front side, and in this way, the operator can confirm the total amount and the like printed on the receipt while the receipt is located at the discharge port 18.

The above embodiment is described merely as an example, and various modifications and applications are applicable.

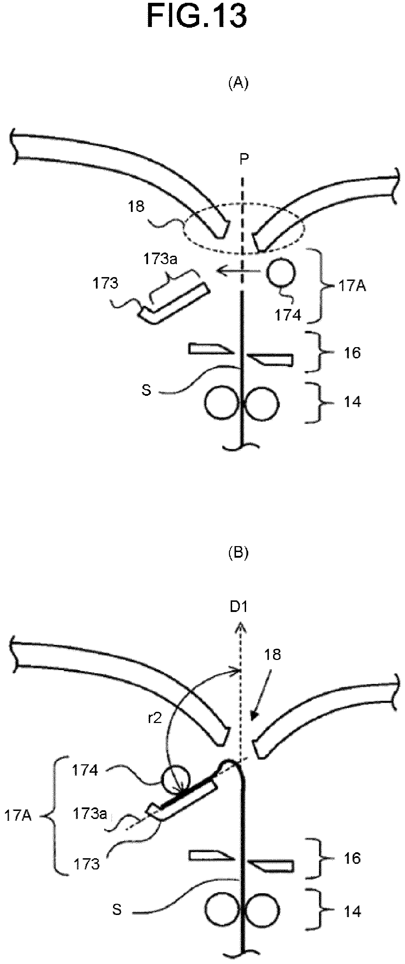

For example, in the clamping section 17 of the above embodiment, the fixed section 171 is a roller and the movable section 172 is a plate-like member having the planar section 172a. However, the constitution of the clamping section 17 is not limited to that. Fig. 13(A) shows a clamping section 17A as a modification of the clamping section 17 of the embodiment. The clamping section 17A is provided with a fixed section 173 (first section) and a movable section 174 (second section).

The fixed section 173 is a plate-like member fixed in the receipt printer 10. The fixed section 173 is located at a position advancing towards the inner side of the receipt printer 10 along the movement route P of the paper S.

A distance from the discharge port 18 to the fixed section 171 is, for example, 1cm∼10cm. The fixed section 173 is located at the device rear side of the movement route P. The fixed section 173 has a planar section 173a at an obliquely upper side.

The movable section 174 is a movable member for clamping the paper S together with the fixed section 173. The movable section 174 is arranged to face the fixed section 173 across the movement route P of the paper S. A rotation shaft of the movable section 174 faces a direction (backward direction in Fig. 13(A)) orthogonal to the movement route P of the paper S. A roller constituting the movable section 174 is applied with a rotation resistance force. Thus, a fixed force is required to rotate the movable section 174. The movable section 174 moves to the fixed section 173 side over the movement route P of the paper S under the control of the controller 11.

Fig. 13(B) is a diagram illustrating a state in which the clamping section 17A clamps the front end of the paper S with the planar section 173a of the fixed section 173 and a circumferential surface of the movable section 174. The planar section 173a is inclined with respect to the paper discharge direction D1. At the time the clamping section 17 clamps the paper S, a paper clamping angle r2 formed by the paper discharge direction D1 and the planar section 173a is greater than 90°. Thus, the paper S is smoothly bent into the loop shape by only continuing the conveyance of the paper S after the front end of the paper S is clamped by the clamping section 17.

Furthermore, the movable section 174 (second section) is not limited to a roller. The movable section 174 may be a plate-like member having the planar section at a side facing the paper S at the time the front end of the paper S is clamped. The fixed section 173 (first section) may be a part of a housing of the receipt printer 10.

In the above embodiment, the fixed section 171 (first section) included in the clamping section 17 is set to the roller as shown in Fig. 11; however, the fixed section 171 is not limited to the roller. The fixed section 171 may be a plate-like member having the planar section at a side facing the paper S at the time the front end of the paper S is clamped. The fixed section 171 may be a part of a housing of the receipt printer 10.

In the above embodiment, any one of the first section and the second section constituting the clamping section 17 or the clamping section 17A is set to the roller; however, both of them may be rollers. The rotation resistance force may be applied to both rollers, or may be applied to only either of the two rollers. The friction generated between the receipt and the clamping section at the time the operator pulls out the receipt can be reduced.

In the above embodiment also, the receipt printer 10 completely cuts the paper S in a case in which the front end of the paper S is clamped by the clamping section 17. However, the receipt printer 10 may partially cut the paper S even if the front end of the paper S is clamped by the clamping section 17.

In the above embodiment, the receipt printer 10 discharges the receipt Sr from the discharge port 18 in a straight shape while the front end of the paper S is not clamped by the clamping section 17 if the length of the receipt is smaller than the present threshold value. However, the receipt printer 10 may bend the paper S into the loop shape to discharge it from the discharge port 18 by clamping the front end of the paper S with the clamping section 17 even if the length of the receipt is smaller than the preset threshold value.

In the above embodiment, the discharge port 18 is opened upward; however, the discharge port 18 may not necessarily be opened upward. For example, the discharge port 18 may be opened in a horizontal direction.

In the above embodiment, the printing section 15 is a thermal print unit; however, the printing section 15 is not limited to the thermal print unit. For example, the printing section 15 may be an impact dot type, an ink jet type, or an electrophotographic print unit.

In the above embodiment, the receipt printer 10 is fixed or built in the commodity information processing apparatus 1; however, the receipt printer 10 may be attached to the commodity information processing apparatus 1. For example, the receipt printer 10 may have a connection interface such as a USB (Universal Serial Bus) or the like to be capable of being connected to the commodity information processing apparatus 1 by a communication cable such as a USB cable or the like.

The receipt printer 10 may have a user interface and operate as a single unit independent of the commodity information processing apparatus 1. The receipt printer 10 may also be connected to a personal computer to operate according to an instruction of the personal computer.

In the above embodiment, the receipt printer 10 is fixed or built in the commodity information processing apparatus 1. However, the commodity information processing apparatus 1 may directly issue the receipt without passing through the receipt printer 10. For example, the commodity information processing apparatus 1 may include the controller (discharge control module) 11, the communication interface 12, the storage section 13, the conveyance section 14, the printing section 15, the cut section 16, the clamping section 17 and the discharge port 18. The controller 11 may be common to a control device (for example, a processor) for controlling each section of the commodity information processing apparatus 1.

In the above embodiment, the commodity information processing apparatus 1 is the POS terminal; however, the commodity information processing apparatus 1 is not limited to the POS terminal. For example, the commodity information processing apparatus 1 may be a stand-alone cash register which does not have a network connection function.

In the above embodiment, the receipt printer 10 is installed in the POS terminal or the stand-alone cash register; however, the device in which the receipt printer 10 is installed may be other devices such as a vending machine.

The control device for controlling the receipt printer 10 or the commodity information processing apparatus 1 according to the present embodiment may be realized by a dedicated computer system or by a general computer system. For example, a program for executing the above-described operation may be stored in a computer-readable recording medium such as an optical disk, a semiconductor memory, a magnetic tape, a flexible disk and the like to be distributed, and the program may be installed in the computer to execute the above processing to constitute the control device. At this time, the control device may be a computer (processor) included in the receipt printer 10 or the commodity information processing apparatus 1, or may be a computer for controlling the receipt printer 10 or the commodity information processing apparatus 1 from the outside. Further, the above program may be stored in a disk device included in a server device on a network such as the Internet to be capable of being downloaded to a computer or the like. Further, the above-described function may be realized by cooperation of an OS (Operating System) and application software. In this case, a part other than the OS may be stored in the medium to be distributed, or may be stored in the server device to be capable of being downloaded to the computer.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims are intended to cover such forms or modifications as would fall within the scope of the invention.

## Claims

1. A receipt printer (10), comprising:
a discharge port (18) configured to discharge a receipt;
a conveyance section (14) configured to convey a paper becoming the receipt to the discharge port;
a clamping section (17) including a first section (171) and a second section (172); and
a discharge control module (11),
**characterized in that** the discharge control module is configured to:
control one of the first and second sections to move toward the other section for clamping a front end of the paper between the first and second sections at an upstream side of the discharge port in a conveyance direction, and
control the conveyance section to continue conveying the paper after the front end of the paper is clamped to discharge a part of the paper which is bent into a loop shape from the discharge port.

2. The receipt printer according to claim 1, wherein at least one of the first section and the second section is provided with a planar section (172a, 173a) at a side thereof facing the paper, and a paper clamping angle (rl, r2) between a line on a surface of the planar section at the time the paper is clamped and a vertical line (P) passing through the center of the discharge port is greater than 90°.

3. The receipt printer according to claim 2, wherein at least one of the first section and the second section is a roller, and the clamping section clamps the paper between a circumferential surface of the roller and the other section of the clamping section.

4. The receipt printer according to any one of claims 1 to 3, further comprising a cut section configured to separate a part becoming the receipt from the paper,
wherein the discharge control module is further configured to control the cut section to carry out a full cut to completely separate the part becoming the receipt from the paper in a case in which at least the front end of the paper is clamped by the clamping section.

5. The receipt printer according to any one of claims 1 to 4, further comprising:
a printing section configured to print information on the paper, wherein
the printing section carries out printing on a surface of the paper, said surface is an outer surface side of the part of the paper which is bent into the loop shape when discharged from the discharge port.

6. The receipt printer according to any one of claims 1 to 5, wherein the discharge control module is further configured to:
determine whether a length of the receipt is longer or shorter than a preset threshold value, and
when determining that the length of the receipt is shorter than the preset threshold value, control the clamping section not to clamp the paper and control the conveyance section to convey the paper to pass between the first and second sections without being clamped to be discharged from the discharge port.

## Patentansprüche

1. Belegdrucker (10), umfassend:
eine Ausgabeöffnung (18), die konfiguriert ist, eine Quittung auszugeben;
einen Förderabschnitt (14), der konfiguriert ist, ein Papier, das zum Beleg wird, zu der Ausgabeöffnung zu befördern;
einen Klemmabschnitt (17) mit einem ersten Abschnitt (171) und einem zweiten Abschnitt (172); und
ein Ausgabesteuer- bzw. -regelmodul (11),
**dadurch gekennzeichnet, dass** das Ausgabesteuer- bzw. -regelmodul konfiguriert ist zum:
Steuern bzw. Regeln eines der ersten und des zweiten Abschnitts dahingehend, sich in Richtung des anderen Abschnitts zu bewegen, um ein vorderes Ende des Papiers zwischen den ersten und den zweiten Abschnitt an einer stromaufwärtigen Seite der Ausgabeöffnung in einer Förderrichtung festzuklemmen, und
Steuern bzw. Regeln des Förderabschnitts dahingehend, das Papier weiter zu fördern, nachdem das vordere Ende des Papiers festgeklemmt ist, um einen Teil des Papiers, der in eine Schleifenform gebogen ist, aus der Ausgabeöffnung auszugeben.

2. Belegdrucker nach Anspruch 1, wobei zumindest einer des ersten Abschnitts und des zweiten Abschnitts mit einem planaren Abschnitt (172a, 173a) an einer dem Papier zugewandten Seite versehen ist, und einen Papierklemmwinkel (r1, r2) zwischen einer Linie auf einer Oberfläche des planaren Abschnitts zum Zeitpunkt des Festklemmens des Papiers und einer vertikalen Linie (P), die durch die Mitte der Ausgabeöffnung verläuft, größer als 90° ist.

3. Belegdrucker nach Anspruch 2, wobei zumindest einer des ersten Abschnitts und des zweiten Abschnitts eine Walze ist und der Klemmabschnitt das Papier zwischen einer Umfangsfläche der Walze und dem anderen Abschnitt des Klemmabschnitts festklemmt.

4. Belegdrucker nach einem der Ansprüche 1 bis 3, ferner umfassend einen Schneidabschnitt, der konfiguriert ist, einen Teil, der zum Beleg wird, von dem Papier zu trennen,
wobei das Ausgabesteuer- bzw. -regelmodul ferner konfiguriert ist, den Schneidabschnitt dahingehend zu steuern bzw. zu regeln, einen vollständigen Schnitt auszuführen, um den Teil, der zum Beleg wird, vollständig von dem Papier zu trennen, und zwar in einem Fall, in dem zumindest das vordere Ende des Papiers durch den Klemmabschnitt festgeklemmt wird.

5. Belegdrucker nach einem der Ansprüche 1 bis 4, ferner umfassend:
einen Druckabschnitt, der konfiguriert ist, Informationen auf das Papier zu drucken, wobei
der Druckabschnitt ein Drucken auf einer Oberfläche des Papiers durchführt, wobei die Oberfläche eine äußere Oberflächenseite des Teils des Papiers ist, der in die Schleifenform gebogen wird, wenn er aus der Ausgabeöffnung ausgegeben wird.

6. Belegdrucker nach einem der Ansprüche 1 bis 5, wobei das Ausgabesteuer- bzw. -regelmodul ferner konfiguriert ist zum:
Bestimmen, ob eine Beleglänge länger oder kürzer als ein voreingestellter Schwellenwert ist, und
wenn bestimmt wird, dass die Länge des Belegs kürzer als der voreingestellte Schwellenwert ist, Steuern bzw. Regeln des Klemmabschnitts dahingehend, das Papier nicht festzuklemmen, und des Förderabschnitts dahingehend, das Papier zu fördern, so dass es zwischen dem ersten und dem zweiten Abschnitt verläuft, ohne festgeklemmt zu werden, um aus der Ausgabeöffnung ausgegeben zu werden.

## Revendications

1. Imprimante de reçu (10), comprenant :
un orifice de déchargement (18) configuré de manière à décharger un reçu ;
une section de transport (14) configurée de manière à transporter une feuille destinée à former le reçu vers l'orifice de déchargement ;
une section de maintien (17) comportant une première section (171) et une seconde section (172) ; et
un module de commande de déchargement (11),
**caractérisée en ce que** le module de commande de déchargement est configuré de manière à :
commander l'une des première et seconde sections afin de se déplacer vers l'autre section de manière à maintenir une extrémité avant de la feuille entre les première et seconde sections au niveau d'un côté amont de l'orifice de déchargement suivant une direction de transport, et
commander la section de transport afin de continuer à transporter la feuille après que l'extrémité avant de la feuille a été maintenue afin de décharger une partie de la feuille qui est courbée en une forme de boucle par l'orifice de déchargement.

2. Imprimante de reçu selon la revendication 1, dans laquelle au moins l'une de la première section et de la seconde section comporte une section plane (172a, 173a) au niveau d'un de leurs côtés faisant face à la feuille, et un angle de maintien de feuille (rl, r2) entre une ligne sur une surface de la section plane lorsque la feuille est maintenue et une ligne verticale (P) passant par le centre de l'orifice de déchargement est supérieur à 90°.

3. Imprimante de reçu selon la revendication 2, dans laquelle au moins l'une de la première section et de la seconde section est un rouleau, et la section de maintien maintient la feuille entre une surface circonférentielle du rouleau et l'autre section de la section de maintien.

4. Imprimante de reçu selon l'une quelconque des revendications 1 à 3, comprenant, en outre, une section de coupe configurée de manière à séparer une partie destinée à former le reçu par rapport à la feuille,
dans laquelle le module de commande de déchargement est, en outre, configuré de manière à commander la section de coupe afin de réaliser une coupe totale de manière à séparer complètement la partie destinée à former le reçu par rapport à la feuille dans un cas dans lequel au moins l'extrémité avant de la feuille est maintenue par la section de maintien.

5. Imprimante de reçu selon l'une quelconque des revendications 1 à 4, comprenant, en outre :
une section d'impression configurée de manière à imprimer des informations sur la feuille, dans laquelle
la section d'impression réalise une impression sur une surface de la feuille, ladite surface est un côté de surface externe de la partie de la feuille qui est courbée en une forme de boucle lorsqu'elle est déchargé par l'orifice de déchargement.

6. Imprimante de reçu selon l'une quelconque des revendications 1 à 5, dans laquelle le module de commande de déchargement est, en outre, configuré de manière à :
déterminer si une longueur du reçu est supérieure ou inférieure à une valeur de seuil prédéfinie, et
lorsqu'il est déterminé que la longueur du reçu est inférieure à la valeur de seuil prédéfinie, commander la section de maintien afin de ne pas maintenir la feuille et commander la section de transport pour transporter la feuille afin de passer entre les première et seconde sections sans être maintenue, de manière à être déchargée par l'orifice de déchargement.
